# EUROPEAN PATENT SPECIFICATION

(11) **EP 1 850 722 B1**
(45) Date of publication and mention of the grant of the patent: **11.11.2015**
(21) Application number: 06710273.1
(22) Date of filing: 27.01.2006
(51) Int. Cl.: A47K 11/02

(54) **TOILET**
TOILETTE
TOILETTES

(30) Priority: 31.01.2005 SE 0500225
(43) Date of publication of application: 07.11.2007
(73) Proprietor: Sirius Technology AS, 6475 Midsund (NO)
(72) Inventor: SJØVIK, Odd Kjell, N-6475 Midsund (NO)
(74) Representative: Hynell, Magnus
(86) International application number: PCT/IB2006/000140
(87) International publication number: WO 2006/079906

(56) References cited:
- US-A- 3 139 626
- US-A- 3 139 626
- US-A- 3 227 114
- US-A- 3 227 114
- US-A- 3 765 035
- US-A- 4 138 331
- US-A- 6 052 836

## Description

### TECHNICAL FIELD

The invention relates to a toilet including a cabinet with a top wall, a bottom wall, a front wall, a rear wall, and two side walls, a first opening in the top wall and a first lid for said first opening, an incineration vessel inside the cabinet at a distance from the top wall of the cabinet, said incineration vessel comprising an upper part and a lower part, a second opening in a top portion of the upper part of the incineration chamber, a second lid for said second opening, and guiding members for guiding faeces and other waste material down into an incineration chamber in the incineration vessel when the second opening is open.

### BACKGROUND OF THE INVENTION

US-A-6,052,836 discloses an electric toilet, which has been well approved due to its qualities. It has, however, some limitations so far that it requires a high electric effect, which means that access of a 110 - 120 or 220 - 240 volts electricity supply system is necessary for its operation. Therefore, it can not be employed on sites which are void of such facilities, e.g. in remote mountain cabins, in small vessels at sea, or in temporarily parked caravans. However, 12 volts DC from rechargeable accumulators is typically available in remote week-end cottages, mountain-cabins, boats, and caravans.

Document US 3139626 A discloses a toilet according to the preamble of claim 1.

### DISCLOSURE OF THE INVENTION

It is the purpose of the invention to address the above mentioned problem through the provision of a toilet, in which faeces and/or other waste materials can be incinerated by means of a gas burner instead of by means of electrically heated elements, at the same time as the toilet maintains essentially all those advantages which characterise the above mentioned toilet, which is described in US-A-6,052,836. This, however, does not mean that those parts of the toilet, which have nothing to do with the very incineration, necessarily have to be designed according to the said patent.

The invention is defined by claim 1.

The condition, that the inner wall shall have capacity to transfer heat substantially more efficiently than the inner wall in the region of said space, can be achieved in some different ways, which not necessarily require that the outer wall is made of a heat insulating material. For example, it can be made much thicker than the inner wall, which may allow it to be made of such robust materials as cast steel or ceramics, without causing the outer surface of the outer wall to be heated to so high temperatures that the surroundings run a risk to be damaged or staff people handling the toilet, e.g. in connection with clearing it, be injured. Also various composite outer wall materials are conceivable, consisting of an inner metal layer facing the space between the inner wall and the outer wall, an outer layer which may consist of a metal, ceramic or plastic material, and an intermediate material of an incombustible, heat insulating material, such as mineral wool. In the case the outer wall consists of a composite material, the end surface facing the parting plane between the lower part and the upper part of the incineration vessel is suitably provided with a convenient heat-resistant and incombustible insulation.

Further characteristic features and aspects of the invention will be apparent from the following description of some conceivable embodiments.

### BRIEF DESCRIPTION OF DRAWINGS

In the following description of preferred embodiments, reference will be made to the accompanying drawings, in which
- Fig. 1: is a side-view in cross-section of a toilet according to a first embodiment of the invention,
- Fig. 2: is a top-view of a base plate and a gas burner included in the apparatus in a view along the line II-II in Fig. 1,
- Fig. 3: is a side-view in cross-section of a toilet which is not part of the present invention, and
- Fig. 4: is a side-view in cross-section of a toilet according to a second embodiment of the invention.

### DESCRIPTION OF PREFERRED EMBODIMENTS

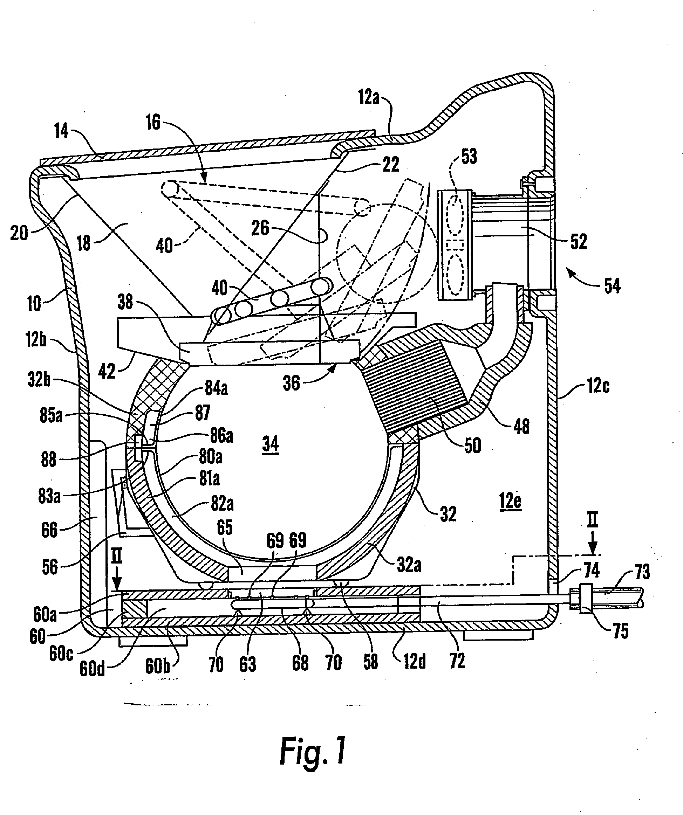

The toilet assemblies shown in Fig. 1,3, and 4 comprise a cabinet 10 of a suitable heat-resistant and heat-insulating material. The cabinet has a top wall 12a, a front wall 12b, a rear wall 12c, a bottom wall 12 and two side walls 12e. It has a proper height, making it comfortable to sit on the toilet seat. On the top wall 12a, a first lid 14 is pivotally provided, at the rear edge of the lid, over a first opening 16, the edge of which is smoothly rounded. Under the first, upper opening 16, a bowl 18, in the following referred to as upper bowl, is connected to the inner surface of the top wall 12a around the edges of the opening 16. The upper bowl 18 has front and rear walls 20, 22, which slope inwards and meet along a line, and side walls which also slope inwards, such that the upper bowl gets a shape like a well known coffee filter funnel. The rear wall 22 has a portion which can be pivotally turned about an attachment located a distance up along the rear wall. The hinged portion is also provided with side walls, which have the same inclination as the side walls of the upper bowl.

An incineration vessel 32 is provided under the upper bowl 18. In the incineration vessel 32 there is an incineration chamber 34. The incineration chamber 34 has a substantially spherical design. The incineration vessel 32 is in two parts, including a lower and an upper part 32a and 32b, respectively. In a top portion of the upper part 32b, there is provided an upper, circular, second opening 36. Said second opening 36 is provided with a lid 38 which closes the incineration chamber 34 by means of a closing ring in the closing position of the lid. The lid 38 is made of a heat resistant material, preferably ceramics. The incineration vessel 32 with the incineration chamber 34 is positioned in relation to the upper bowl 18 such that the lower end of the front wall 20 of the upper bowl is provided above and at the front edge of the upper opening 36 of the incineration chamber 34. A link assembly 40 is attached on one hand to the hinged part 26 of the upper bowl 18 and on the other hand to the lid 38 of the incineration vessel 32. The link assembly 40 is preferably operated by means of a pedal (not shown). A spillage protection 42 in the form of a trough with side panels is provided on the incineration vessel 32 and around its upper opening 36.

An evacuation tube 48 extends from the incineration chamber 34 through the wall of the upper part 32b. A catalyzer 50 is provided in the tube 48, adjacent to the incineration chamber 34. The tube 48 proceeds to an outlet 52, which extends through the rear wall 12c of the cabinet 10. A fan 53 is provided to blow off the flue gases from the incineration chamber 34 through the outlet 52, which is connected to a convenient ventilating pipe (not shown). The fan 53 is suitably powered by a 12 volts DC motor.

The lower part 32a of the incineration vessel 32 is provided with a handle 56 on its front side, and with feet or beads 58. A base assembly 60 is provided between the incineration vessel 32 and the bottom wall 12d. The base assembly 60 includes an upper base plate 60a, a bottom plate 60b, and a space 60d between the base plate 60a and the bottom plate 60b. The height of the space 60d is defined by spacers 60c, which are provided between the base plate 60a and the bottom plate 60b.

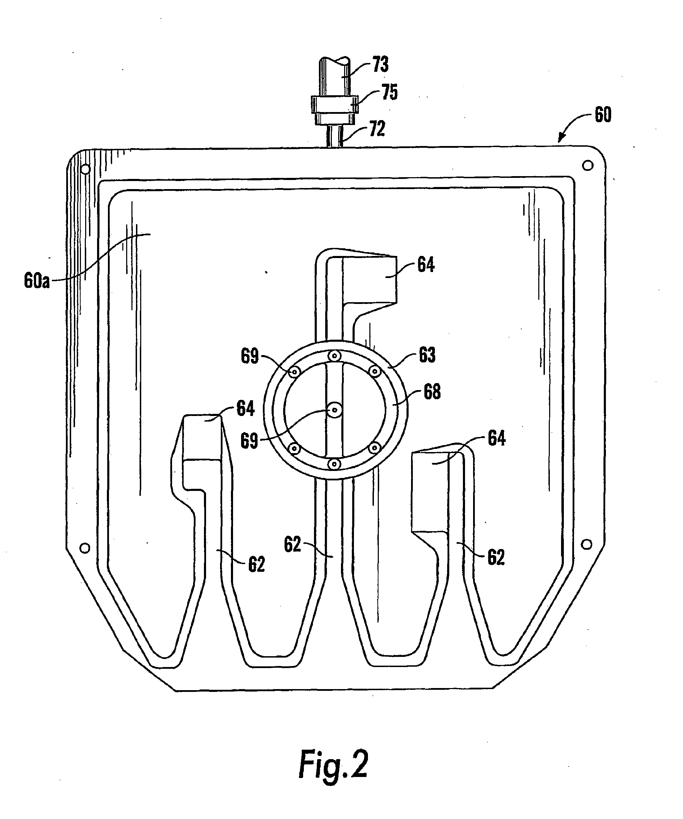

Three slots 62 are provided in the base plate 60a, Fig. 2, and ramps 64, which extend from the slots to the top surface of the base plate 60a. Further, a large circular opening 63 is provided in the centre, between the ramps 64.

A gas burner 68 is provided in the space 60d, straight under the opening 63 of the base plate 60a. Alternatively, the gas burner 68 may be positioned in the very opening 60a or extend up into the opening. The gas burner 68 consists of an annular tube conduit having a transversal tubular interconnection. The tube members are provided with several burner nozzles 69 for burning gas, e.g. propane. The burner 68 is secured in the space 60d, under the opening 63, by means of fixing members 70. Optionally, the burner nozzles extend a little upwards into the opening 63, however not so far up that they can touch any of the feet 58, when the lower part shall be pulled out, as will be explained in the following. A gas connection pipe is designated 72 and extends through an opening 75 in the rear wall 12c of the cabin 10. A gas supply hose 73 extends from a not shown gas tank to a coupling 75, connected to the pipe 72. Possibly, the coupling 75 is instead positioned inside of the opening 74. The opening 74 is big enough to allow also an inflow of air to the gas burner 68. The front wall of the cabin 10 is provided with a shutter 66 in the lower part of the front wall.

According to the invention, at least the lower part 32a of the incineration vessel 32 is at least double-walled in at least a lower portion of said lower part 32a, including an inner wall and an outer wall at a distance from the inner wall, such that a bowl-shaped space is formed between the inner wall and the outer wall. In Fig. 1, the inner wall, the outer wall, and the bowl-shaped space are designated 80a, 81 a, and 82a, respectively. A circular opening 65 is provided in the bottom portion of the outer wall. The circular opening 65 and the opening 63 in the base plate 60a are equally large and are concentric, when the lower part 32a of the incineration vessel 32 is in its functional position. Said space between said inner wall and said outer wall communicates with the opening 65 in the outer wall in the bottom of the lower part 32a.

According to the first embodiment of the invention, which is shown in Fig. 1, the inner wall/bowl 80a embraces the entire inner surface of the lower part 32a of the incineration vessel 32. Suitably, the inner wall or bowl 82a is made of steel, preferably a heat resistant and corrosion resistant stainless steel, while the outer wall 81a may be made of e.g. a cast steel or ceramics or be made of an insulating composite material. A purpose of making the lower part 32a of the incineration vessel double-walled, is to make it possible to transfer heat from the space 82a to the incineration chamber 34 through the inner wall 80a, at the same time as heat losses through the outer wall 81a are minimized. Therefore, the inner wall/bowl 80a is significantly thinner than the outer wall 81 a. In order to reduce the flow of heat through the outer wall, the outer wall may also be made of a material having a significantly lower capacity of heat transmission than the inner wall, as has been mentioned in the introductory disclosure of the invention.

As has been mentioned, the inner wall/bowl 80a embraces the entire inside of the lower part 32a of the incineration vessel 32 according to the first embodiment of the invention. At its top, in the region of contact with the upper part 32b of the incineration vessel, there is an upper, annular wall 83a. The bowl shaped space 82a thus extends from the opening 65 all the way to the upper, annular wall 83a. According to the same embodiment, also the upper part 32b of the incineration vessel 32 is double walled in the region of a spherical sector opposite to the evacuation tube 48 containing the catalyzer 50. In the upper part 32b therefore, there is also an inner wall 84a of steel, which down in its lower end is folded in, defining a folded in wall portion 85a, which is pressed against the wall 83a in the functional state of the toilet, so that a space 86a is formed like a recess in the upper part 32a inside of the wall 84a. A number of coinciding openings are provided in the folded in wall portions 83a and 85a, such that the spaces 82a and 86a will communicate with one another. Alternatively, one or more by-pass conduits 88 may be provided in the outer walls of the lower part 32a and the upper part 32b between the spaces 82a and 86a in the region of the parting plane between the parts 32a and 32b. Further, a series of openings 87 are provided in the wall 84a, so that heat gases can be transferred into the incineration chamber 34 from the space 82a via said coinciding openings in the wall portions 83a and 85a and/or through said by-pass conduits 88 to the space 86a and from that space through the openings 87 into the incineration chamber 34.

When a bag containing faeces, thus has fallen down into the incineration chamber 34 in the previously described mode, and the lid 36 on top of the incineration chamber 34 has been closed, the gas burner 68 is ignited. The evacuation fan 53 has already been activated by the opening of the lid 14 prior to using the toilet. Gas flowing up through the burner nozzles 69 are combusted, oxygen required for the combustion being supplied in the form of air, which flows into the interior of the cabinet, e.g. through the opening 74. The flames are directed upwards through the opening 63 in the base plate 60a towards the opening 65 in the outer wall 81a of the incineration vessel in the lower part 32a of the vessel. The flames and the hot combustion gases heat the inner bowl/wall 80a very intensely. Further, the hot gaseous product, which is achieved as a result of the combustion of gas, flows up into the space 82a, where it heats also the upper portion of the inner bowl/wall 80a, after which the hot gaseous products flow through the connection/connections 88 up into the space 86a in the upper part 32b, where they heat the inner wall 84a, and finally through the openings 87 into the incineration chamber 34, where they through direct combustion of the products in the incineration chamber 34 complete the indirect incineration via the inner bowl/wall 80a and the inner wall 84a. Under the influence of the heat from the bowl/wall 80a, the wall 84a, and from the direct combustion of the gases which are flowing in, the faeces and other combustible products which may have been brought down into the incineration chamber 34 are thus caused to be combusted, vaporized, and/or evaporated. The flue gases and vapours are led up through the catalyzer 50, where they are cleaned from bad smell and further through the evacuation conduit 48 to the outlet 52. The fan 53 receives its supply of air from the interior of the cabinet, where it causes a circulation of air.

Emptying the toilet is performed through the shutter 66 in the toilet's front wall 12b. When the shutter 66 has been opened, the entire lower part 32a of the incineration vessel 32 is turned by means of the handle 56, which causes the feet 58 to slide on the base plate 60a, down along the ramps 64 and finally drop down in the slots 62, whereupon the lower part can be pulled out and be emptied. During this operation, a hind foot 58 will be moved over the opening 63 in the base plate 60a, but if the burner 68 and its nozzles are properly positioned and/or if the thickness of the base plate 60a is properly chosen, it is possible to prevent the foot 58 that shall be moved over the opening 63 from touching any part of the gas burner 68.

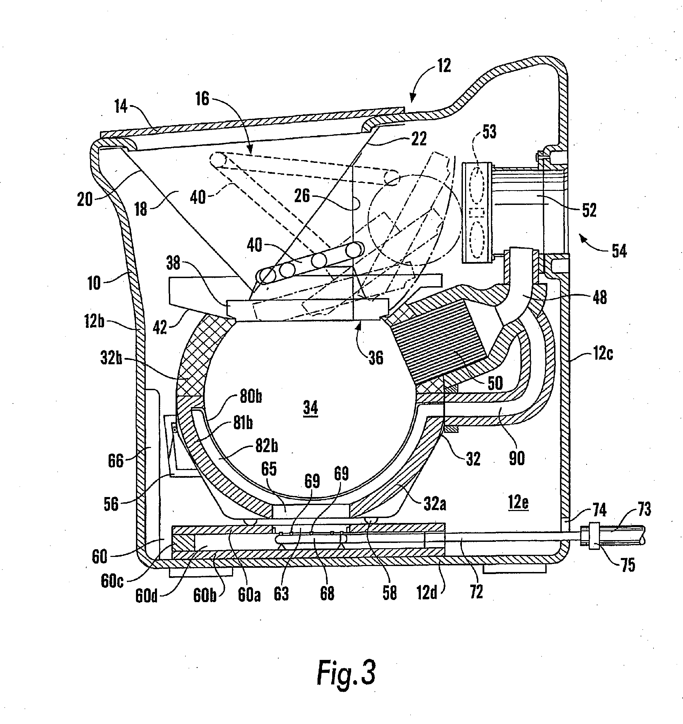

The toilet, which is illustrated in Fig. 3 is not part of the present invention and, is distinguished from the above described first embodiment in that the inner wall 80b and the space 82b between the inner wall 80b and the outer wall 81b in the lower part 32a of the incineration vessel, do not extend all the way up to the parting plane between the upper and lower parts 32b, 32a of the incineration vessel 32, but are terminated a short distance before said parting plane. Further, the hot combustion gases which are generated through the combustion in the gas burner 68 are not transmitted into the incineration chamber 34 but are evacuated via a by-pass conduit 90 to the evacuation tube 48, without passing the catalyzer 50.

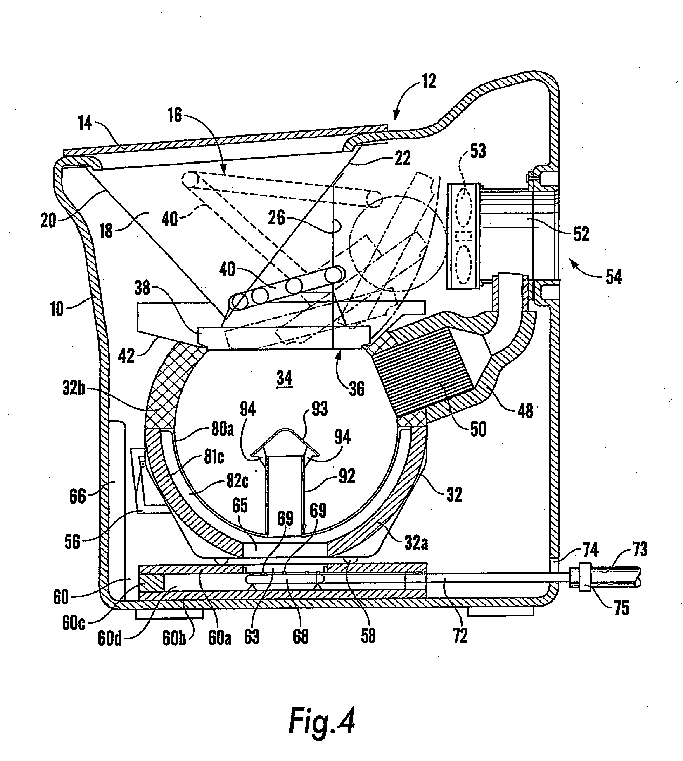

In the embodiment according to Fig. 4, the inner wall/bowl 80c, and the bowl shaped space 82c, extend up to the parting plane between the lower and upper parts 32a and 32b, respectively, of the incineration vessel, where the inner wall/bowl also has an annular, upper wall 83c. Moreover, a vertical tube 92 extends from the bottom of the inner wall/bowl 80c up to approximately the centre of the incineration vessel 34. The tube 92 communicates with the space 82c between the inner wall 80c and the outer wall 81c and with the opening 65 in the outer wall 81c of the lower part 32a. The tube 92 is open in its upper end. A hood 93 is mounted on top of the tube, guiding the faeces so they do not enter tube openings 94. Combustion gases may thus be transmitted via the openings 63 and 65 up into the bowl shaped space 82c, where the gases heat the inner wall 80c for indirect incineration of the products in the incineration chamber 34, and also through the tube 92, up through the openings 94 under the hood 93 and into the incineration chamber 34, where they take part in the destruction of the faeces and other waste material through direct combustion. Also the tube 92 itself is heated to a high temperature, so that it can contribute to the destruction of the products through indirect incineration. According to this embodiment, the incineration of the faeces thus is carried out through indirect heating via the "bowl wall" 80c and via the tube 92 which also is heated to a high temperature, as well as through direct combustion by means of the combustion gases which are led in through the tube 92. The hot flue gases from the combustion in the incineration chamber 34 are evacuated through the catalyzer, as according to the two foregoing embodiments, for the elimination of bad smell. According to the described embodiments, the inner wall and the outer wall are uniform, and the distance between the outer wall and the inner wall is equally large within substantially the entire region that is embraced by the bowl shaped space. This promotes an even and intense transmission of heat to the incineration chamber 34 from the said heated, bowl shaped space.

It should be understood that the invention may be varied and more embodiments be suggested within the invention as defined by the claims. Thus, the design of the upper and lower parts of the incineration chamber 34 need not necessarily be spherical. However, at least the inner, heat transmitting wall/bowl 80a, 80b, 80c, should be even and shaped like a bowl without nooks and corners where products could be collected and avoid efficacious incineration. The spherical shape is believed to be the perfect design, which, however, does not exclude that also other, preferably smooth, round shapes are conceivable.

## Claims

1. A toilet including a cabinet (10) with a top wall (12a), a bottom wall (12d), a front wall (12b), a rear wall (12c), and two side walls (12e), a first opening (16) in the top wall and a first lid (14) for said first opening, an incineration vessel (32) with an incineration chamber (34) in said incineration vessel, said incineration vessel being inside the cabinet (10) at a distance from the top wall of the cabinet, said incineration vessel comprising an upper part (32b) and a lower part (32a), a second opening (36) in a top portion of the upper part (32b) of the incineration chamber, a second lid (38) for said second opening, and guiding members for guiding faeces and other waste material down into an incineration chamber (34) in the incineration vessel (32) when the second opening (36) is open, where in at least the lower part (32a) of the incineration vessel is at least double-walled in the region of at least a lower portion of said lower part, including an inner wall (80a, 80b, 80c) and an outer wall (81a, 81b, 81c) at a distance from the inner wall, a lower opening (65) in the outer wall (81 a, 81b, 81 c) in said lower portion of said lower part of the incineration vessel, a space (82a, 82b, 82c) between the inner wall (80a, 80b, 80c) and the outer wall (81 a, 81b, 81 c) communicating with said opening (65) in the outer wall a gas burner (68) located in or beneath the opening in the outer wall for heating the incineration chamber and incinerating, at least partly via said space between the inner wall and the outer wall and via the inner wall in the region of said space, any waste deposited in the incineration chamber, said inner wall having capacity to transfer heat more efficiently than the outer wall in the region of said space, **characterised in that** said space between the inner and the outer wall communicates with the incineration chamber, such that any waste deposited in the incineration chamber can be incinerated through direct combustion by means of gases flowing into the incineration chamber from said space and through indirect incineration via said inner wall, which is heated to a high temperature.

2. A toilet according to claim 1, **characterised in that** said inner wall is made of a metal in the shape of a bowl without nooks and corners.

3. A toilet according to claim 2, **characterised in that** said bowl has the shape of essentially a semi-sphere.

4. A toilet according to any of claims 1-3, **characterised in that** a tube (92) extends upwards from the bottom of said lower part, said tube being open in its upper end and communicating in its lower end with said space between the inner wall and the outer wall and with the opening (65) in the outer wall (81 c) of said lower portion.

5. A toilet according to any of claims 1-4, **characterised in that** a base plate (60a) is provided under the incineration vessel, that the lower part of the incineration vessel is provided to be able to be pulled out from the cabinet of the toilet, that an opening (63) is provided in said base plate, positioned beneath the opening (65) in the outer wall of the incineration vessel, and that the gas burner (68) is provided under or in said opening (63) in said base plate.

6. A toilet according to claim 5, **characterised in that** the opening (65) in the outer wall of the incineration vessel is at least as large as the horizontal extension of the gas burner (68).

7. A toilet according to claim 5, **characterised in that** the opening (65) in the outer wall of the incineration vessel is at least as large as the opening (63) in the base plate.

8. A toilet according to claim 6 or 7, **characterised in that** said openings (63, 65) are concentric.

9. A toilet according to any of claims 5-8, **characterised in that** the vertical distance between the openings (63, 65) is between 4 and 12 mm, preferably between 5 and 10 mm.

10. A toilet according to any of claims 1-9, **characterised in that** the inner wall (80a, 80b, 80c) and the outer wall (81 a, 81b, 81c) are uniform, and that the distance between the inner wall and the outer wall in said space (82a, 82b, 82c) between the inner wall and the outer wall is equal within substantially the entire region of said space.

## Patentansprüche

1. Toilette umfassend ein Gehäuse (10) mit einer oberen Wand (12a), einer unteren Wand (12d), einer vorderen Wand (12b), einer hinteren Wand (12c) und zwei seitlichen Wänden (12e), einer ersten Öffnung (16) in der oberen Wand und einer ersten Klappe (14) für die erste Öffnung, einem Verbrennungsgefäß (32) mit einer Verbrennungskammer (34) innerhalb des Verbrennungsgefäßes, wobei sich das Verbrennungsgefäß in dem Gehäuse (10) mit einem Abstand von der oberen Wand des Gehäuses befindet, wobei das Verbrennungsgefäß umfasst: einen höheren Teil (32b) und einen niedrigeren Teil (32a), eine zweite Öffnung (36) in einem oberen Teilbereich des höheren Teils (32b) der Verbrennungskammer, eine zweite Klappe (38) für die zweite Öffnung, und Leitelemente, um Kot und andere Abfallstoffe nach unten in eine Verbrennungskammer (34) im Verbrennungsgefäß (32) zu leiten, wenn die zweite Öffnung (36) offen ist, wobei zumindest der niedrigere Teil (32a) des Verbrennungsgefäßes mindestens doppelwandig ist im Bereich zumindest eines niedrigen Teilbereichs dieses niedrigen Teils, beinhaltend eine innere Wand (80a, 80b, 80c) und eine äußere Wand (81a, 81b, 81c) in einem Abstand von der inneren Wand, eine untere Öffnung (65) in der äußeren Wand (81a, 81b, 81c) in dem niedrigeren Teilbereich des niedrigeren Teils des Verbrennungsgefäßes, einen Raum (82a, 82b, 82c) zwischen der inneren Wand (80a, 80b, 80c) und der äußeren Wand (81a, 81b, 81c) der mit der Öffnung (65) der äußeren Wand in Verbindung steht, einen Gasbrenner (68), angeordnet in oder unter der Öffnung in der äußeren Wand, um die Verbrennungskammer zu erhitzen und, zumindest teilweise, über den Raum zwischen der inneren Wand und der äußeren Wand und über die innere Wand im Bereich dieses Raumes, jedweden Abfall, welcher in der Verbrennungskammer deponiert wurde, zu verbrennen, wobei die innere Wand fähig ist, Wärme effizienter zu übertragen als die äußere Wand im Bereich dieses Raumes,
**gekennzeichnet dadurch, dass** der Raum zwischen der inneren und der äußeren Wand in Verbindung steht mit der Verbrennungskammer, so dass jedweder Abfall, welcher in der Verbrennungskammer deponiert wurde, durch direkte Verbrennung mittels Gasen, die aus diesem Raum in die Verbrennungskammer strömen, und durch indirekte Verbrennung über die innere Wand, die auf eine hohe Temperatur aufgeheizt wird, verbrannt wird.

2. Toilette gemäß Anspruch 1, **gekennzeichnet dadurch, dass** die innere Wand aus einem Metall in Form einer Schale ohne Winkel und Ecken hergestellt ist.

3. Toilette gemäß Anspruch 2, **gekennzeichnet dadurch, dass** die Schale im Wesentlichen die Form einer Halbkugel hat.

4. Toilette gemäß einem der Ansprüche 1-3, **gekennzeichnet dadurch, dass** eine Röhre (92) vom Boden des besagten niedrigeren Teils aus aufwärts verläuft, wobei die Röhre an ihrem höheren Ende offen ist und an ihrem niedrigerem Ende in Verbindung steht mit dem Raum zwischen der inneren Wand und der äußeren Wand und mit der Öffnung (65) der äußeren Wand (81c) des besagten niedrigeren Teilbereichs.

5. Toilette gemäß einem der Ansprüche 1-4, **gekennzeichnet dadurch, dass** eine Bodenplatte (60a) unter dem Verbrennungsgefäß bereitgestellt ist, dass der niedrigere Teil des Verbrennungsgefäßes so bereitgestellt ist, um ein Herausziehen aus dem Gehäuse der Toilette zu ermöglichen, dass eine Öffnung (63) in der Bodenplatte bereitgestellt wird, welche unter der Öffnung (65) der äußeren Wand des Verbrennungsgefäßes positioniert ist, und dass der Gasbrenner (68) unter der Öffnung (63) besagter Bodenplatte bereitgestellt ist.

6. Toilette gemäß Anspruch 5, **gekennzeichnet dadurch, dass** die Öffnung (65) in der äußeren Wand des Verbrennungsgefäßes mindestens so groß wie das horizontale Maß des Gasbrenners (68) ist.

7. Toilette gemäß Anspruch 5, **gekennzeichnet dadurch, dass** die Öffnung (65) in der äußeren Wand des Verbrennungsgefäßes mindestens so groß wie die Öffnung (63) in der Bodenplatte ist.

8. Toilette gemäß Anspruch 6 oder 7, **gekennzeichnet dadurch, dass** besagte Öffnungen (63, 65) konzentrisch sind.

9. Toilette gemäß einem der Ansprüche 5-8, **gekennzeichnet dadurch, dass** der vertikale Abstand zwischen den Öffnungen (63, 65) zwischen 4 und 12 mm, bevorzugt zwischen 5 und 10 mm, beträgt.

10. Toilette gemäß einem der Ansprüche 1-9, **gekennzeichnet dadurch, dass** die innere Wand (80a, 80b, 80c) und die äußere Wand (81a, 81b, 81c) gleichförmig sind, und dass der Abstand zwischen der inneren Wand und der äußeren Wand in besagtem Raum (82a, 82b, 82c) zwischen der inneren Wand und der äußeren Wand im Wesentlichen über den gesamten Bereich dieses Raumes gleich ist.

## Revendications

1. Des toilettes comprenant un cabinet (10) ayant une paroi supérieure (12a), une paroi inférieure (12d), une paroi avant (12b), une paroi arrière (12c), et deux parois latérales (12e), une première ouverture (16) dans la paroi supérieure et un premier couvercle (14) pour ladite première ouverture, une enceinte d'incinération (32) ayant une chambre d'incinération (34) dans ladite enceinte d'incinération, ladite enceinte d'incinération étant située à l'intérieur du cabinet (10) à distance de la paroi supérieure du cabinet, ladite enceinte d'incinération comprenant une partie supérieure (32b) et une partie inférieure (32a), une deuxième ouverture (36) dans une portion supérieure de la partie supérieure (32b) de l'enceinte d'incinération, un deuxième couvercle (38) pour ladite deuxième ouverture, et des organes de guidage destinés à guider les excréments et autres déchets vers le bas dans la chambre d'incinération (34) située dans l'enceinte d'incinération (32) lorsque la deuxième ouverture (36) est ouverte, au moins la partie inférieure (32a) de l'enceinte d'incinération étant au moins à double paroi dans la zone d'au moins la portion inférieure de ladite partie inférieure, comprenant une paroi intérieure (80a, 80b, 80c) et une paroi extérieure (81a, 81b, 81c) située à distance de la paroi intérieure, une ouverture inférieure (65) dans la paroi extérieure (81a, 81b, 81c) dans ladite portion inférieure de ladite partie inférieure de l'enceinte d'incinération, un espace (82a, 82b, 82c) aménagé entre la paroi intérieure (80a, 80b, 80c) et la paroi extérieure (81a, 81b, 81c) communiquant avec ladite ouverture (65) aménagée dans la paroi extérieure, avec un brûleur à gaz (68) situé dans ou au-dessous de l'ouverture aménagée dans la paroi extérieure pour chauffer la chambre d'incinération et pour incinérer, au moins en partie par ledit espace situé entre la paroi intérieure et la paroi extérieure et par la paroi intérieure dans la zone dudit espace, tous les déchets déposés dans la chambre d'incinération, ladite paroi intérieure ayant une capacité à transférer de la chaleur plus efficacement que la paroi externe dans la zone dudit espace, **caractérisées en ce que** ledit espace situé entre la paroi intérieure et la paroi extérieure communique avec la chambre d'incinération, de sorte que tous les déchets déposés dans la chambre d'incinération peuvent être incinérés par combustion directe au moyens de gaz s'écoulant dans la chambre d'incinération depuis ledit espace et par incinération indirect via ladite paroi interne, qui est chauffée à une température élevée.

2. Des toilettes selon la revendication 1, **caractérisées en ce que** ladite paroi intérieure est faite d'un métal sous la forme d'une cuvette sans coins et recoins.

3. Des toilettes selon la revendication 2, **caractérisées en ce que** ladite cuvette a une forme essentiellement en demi-sphère.

4. Des toilettes selon l'une quelconque des revendications 1 à 3, **caractérisées en ce qu'**un tube (92) s'étend vers le haut à partir du fond de ladite partie inférieure, ledit tube étant ouvert à son extrémité supérieure et communiquant à son extrémité inférieure avec ledit espace situé entre la paroi intérieure et la paroi extérieure et avec l'ouverture (65) aménagée dans la paroi extérieure (81c) de ladite portion inférieure.

5. Des toilettes selon l'une quelconque des revendications 1 à 4, **caractérisées en ce qu'**une plaque de base (60a) est prévue sous l'enceinte d'incinération, et **en ce que** la partie inférieure de l'enceinte d'incinération est prévue pour pouvoir être retirée du cabinet de toilettes, **en ce qu'**une ouverture (63) est prévue dans ladite plaque de base, positionnée au-dessous de l'ouverture (65) aménagée dans la paroi extérieure de l'enceinte d'incinération, et **en ce que** le brûleur à gaz (68) est prévu sous ou dans ladite ouverture (63) aménagée dans ladite plaque de base.

6. Des toilettes selon la revendication 5, **caractérisées en ce que** l'ouverture (65) aménagée dans la paroi extérieure de l'enceinte d'incinération est au moins aussi grande que l'extension horizontale du brûleur à gaz (68).

7. Des toilettes selon la revendication 5, **caractérisées en ce que** l'ouverture (65) aménagée dans la paroi extérieure de l'enceinte d'incinération est au moins aussi grande que l'ouverture (63) dans la plaque de base.

8. Des toilettes selon la revendication 6 ou la revendication 7, **caractérisées en ce que** lesdites ouvertures (63, 65) sont concentriques.

9. Des toilettes selon l'une quelconque des revendications 5 à 8, **caractérisées en ce que** la distance verticale entre les ouvertures (63, 65) est comprise entre 4 et 12 mm, de préférence entre 5 et 10 mm.

10. Des toilettes selon l'une quelconque des revendications 1 à 9, **caractérisées en ce que** la paroi intérieure (80a, 80b, 80c) et la paroi extérieure (81a, 81b, 81c) sont uniformes, et **en ce que** la distance entre la paroi intérieure et la paroi extérieure dans ledit espace (82a, 82b, 82c) situé entre la paroi intérieure et la paroi extérieure est sensiblement égale à l'intérieur de toute la zone dudit espace.
